# EUROPEAN PATENT SPECIFICATION

(11) **EP 4 596 899 B1**
(45) Date of publication and mention of the grant of the patent: **14.10.2026**
(21) Application number: 24155467.4
(22) Date of filing: 02.02.2024
(51) Int. Cl.: F16B 11/00, F16B 3/00, F16B 21/00

(54) **CONNECTING INTERFACE STRUCTURE AND METHOD OF CONNECTING A CABIN ELEMENT TO A PRIMARY STRUCTURE**
VERBINDUNGSSCHNITTSTELLENSTRUKTUR UND VERFAHREN ZUR VERBINDUNG EINES KABINENELEMENTS MIT EINER PRIMÄRSTRUKTUR
STRUCTURE D'INTERFACE DE CONNEXION ET PROCÉDÉ DE CONNEXION D'UN ÉLÉMENT DE CABINE À UNE STRUCTURE PRIMAIRE

(43) Date of publication of application: 06.08.2025
(73) Proprietor: Airbus Operations GmbH, 21129 Hamburg (DE)
(72) Inventor: Eschen, Henrik, Hamburg (DE); Boyksen, Jan, Hamburg (DE); Koblitz, Ralf, Hamburg (DE)
(74) Representative: Isarpatent

(56) References cited:
- EP-A1- 3 718 877
- EP-A1- 3 907 409

## Description

The present invention pertains to a connecting interface structure for connecting a cabin element to a primary structure of a fuselage of a vehicle and a method of connecting a cabin element to a primary structure of a fuselage of a vehicle.

Although it can be used in many applications, the present invention and the problems underlying it are explained in greater detail in relation to passenger or cargo aircraft. However, the methods and devices described can likewise be used in vehicles in all sectors of the transport industry, e.g. for road vehicles, for rail vehicles, for general aircraft or for watercraft.

Interfaces used for joining cabin elements such as the crown module with the primary structure of an aircraft consists of fork heads that are fixed to the structure with connecting elements such as threaded bolts that are fixed with nuts. Multiple individually adjusted threads are used for two dimensional tolerance compensation. The rotary joint of the fork head gives a third degree of freedom. Installation relies on sequential, manual adjustment and locking of each interface to the fuselage. For each assembly position a worker needs to lock the respective structure to the aircraft fuselage and manually adjust the interface for tolerance compensation. This process is time-consuming and physically demanding due to limited accessibility of the interfaces.

EP 3 718 877 A1 discloses a joint with a floating socket receiving a spigot that allows adjustment, with the socket being secured in position after curing of a curable medium.

Against this background, it is an object of the present invention to find a solution for joining cabin elements with the primary structure of a vehicle, in particular an aircraft, which require less time in the cabin installation process, allow for better tolerance compensation and improve ergonomics in the installation process.

This object is achieved by a connecting interface structure having the features of claim 1 and a method having the features of claim 9.

According to a first aspect of the invention, a connecting interface structure for connecting a cabin element to a primary structure of a fuselage of a vehicle, in particular an aircraft, is provided. The connecting interface structure comprises a plug-in element having an outer circumference and protruding towards the primary structure provided at the cabin element. At the primary structure a plug-in receptable is provided having an inner space with an inner circumference and an inner end face. The inner space is configured to receive the plug-in element in a clearance fit. In a clearance between the plug-in receptable and the plug-in element a potting compound is provided that stably connects the plug-in receptable and the plug-in element. The connecting interface structure enables the integration of tolerance compensation and locking of cabin elements (e. g. a crown module) with the fuselage in one defined installation movement, thus eliminating a large number of manual installation steps thereby reducing the lead time of cabin installation. Suitable potting compounds are selected from a wide variety of potting compounds and according to the requirements set out by the installation process. The potting compound used in the invention can in particular be selected from an activated potting compound, a 1K- or 2K-potting compound or a potting compound on a silicone, epoxy, urethane or polyacrylate basis, without limiting the invention thereto.

A further aspect of the invention lies in a method of connecting a cabin element to a primary structure of a fuselage of a vehicle, in particular an aircraft, using the connecting interface structure, wherein the at least one plug-in element provided at the cabin element and protruding towards the primary structure is inserted in a clearance fit in the inner space of at least one plug-in receptable provided at the primary structure, followed by adjusting the position of the cabin element with respect to the fuselage for tolerance compensation and filling a clearance between the bolt-shaped plug-in element and the inner circumference of the inner space with a potting compound, in particular an activated potting compound.

A further aspect of the invention lies in a vehicle, in particular an aircraft, having a fuselage provided with at least one cabin element connected to a vehicle primary structure using the connecting interface structure and the method of connecting the cabin element to the primary structure of the fuselage of the vehicle.

Advantageous embodiments and further developments are apparent from the further dependent claims and from the description with reference to the figures.

According to another aspect of the invention, the inner space of the plug-in receptable is configured to be filled after receiving the plug-in element with a potting compound, in particular an activated potting compound. It is thus established a position stable connection of the bolt-shaped plug-in element and the plug-in receptable. This provides an advantage of carrying out tolerance compensation for up to six degrees of freedom within a small installation space using a small number of process steps and of firmly storing the degrees of freedom by creating an inseparable connection utilizing the potting compound. The term six degrees of freedom as used herein refers to six mechanical degrees of freedom of movement of a rigid body in three-dimensional space. Specifically, the body is free to change position as forward/backward, up/down, left/right translation in three perpendicular axes, combined with changes in orientation through rotation about three perpendicular axes.

According to an embodiment of the connecting interface structure the plug-in receptable is configured as an essentially round bushing having a pot-shaped configuration. This can provide an advantage during the positioning and tolerance compensation for up to six degrees of freedom and to ensure a small installation space.

According to a further embodiment of the connecting interface structure the plug-in element is configured as a bolt having an at least essentially round outer circumference. It is an advantage of this embodiment that process steps can be accomplished faster since the bolt-shaped design facilitates the insertion into the plug-in receptable as well as the positioning and tolerance compensation for up to six degrees of freedom when inserted.

According to a further embodiment of the connecting interface structure the plug-in element has an end region formed as a tip. When fully inserted into the plug-in receptable, the tip abuts to the inner end face of the plug-in receptable. It is an advantage of this embodiment, that the tip provides a guiding during the insertion and a positioning of the bolt shaped plug-in element with respect to the plug-in receptable.

According to a further embodiment of the connecting interface structure at least one centering means is provided in at least one of the plug-in receptable and the plug-in element. The centering means protrudes from at least one of the inner circumference of the plug-in receptable and the outer circumference of the plug-in element. The protruding means also provide an outer or inner contour of the plug-in element and the plug-in receptable, respectively, which supports a positive connection between the potting compound and the elements during and after installation. The protruding means or contour formed thereby ensures the clearance fit between the two elements, which enables the tolerance compensation of rotational and translational degrees of freedom.

In an embodiment of the connecting interface structure the plug-in receptable is preferably provided one of connected to the primary structure and incorporated into the primary structure. This allows for positioning of the connecting interface structure according to space requirements during assembly of the primary structure and adaption to the configuration of the cabin element to be connected.

According to a further embodiment of the connecting interface structure, the cabin element is at least one of a crown module, a cabin component, a cabin system and a cabin substructure to be installed in the vehicle fuselage. It is considered advantageous in this embodiment, that the connecting interface structure provides a mechanical solution with local up to six degrees of freedom tolerance compensation capability that enables installation and locking of a plurality of configurations of cabin elements and adaptation to the installation requirements set out by these elements.

The invention connecting interface structure is intended to implement a flexible joining process with the possibility of tolerance compensation in up to six degrees of freedom and filling a clearance with a potting compound, that firmly stores the degrees of freedom by creating an inseparable connection.

According to a further embodiment of the method, the potting compound is allowed to harden or cure to establish a position stable connection of the bolt-shaped plug-in element in the plug-in receptable. This allows for an advantageously easy storing of the degrees of freedom after final positioning of the cabin element with respect to the primary structure and tolerance compensation, by creating an inseparable connection utilizing the potting compound.

According to a further embodiment of the method, the at least one centering means provided in at least one of the plug-in receptable and the plug-in element and protruding from at least one of the inner circumference of the plug-in receptable and the outer circumference of the plug-in element is embedded in the potting compound. This has the advantage, that the contour formed by the centering means improves a positive connection between the potting compound, the plug-in element and the plug-in receptable, respectively, during the installation process.

According to a further embodiment the method a plurality of plug-in receptables is provided at the primary structure of the fuselage and a plurality of corresponding plug-in elements is provide at the cabin element and the respective plug-in elements are inserted simultaneously or sequentially in the respective plug-in receptables. This has the advantage, that the integration of tolerance compensation of a large number of structural interfaces between two large systems (e. g. the crown module and the fuselage) is enabled in one defined installation movement.

According to a further embodiment of the method, after adjusting the position of the cabin element with respect to the fuselage for tolerance compensation following insertion of the respective plug-in elements in the respective plug-in receptables, clearances between the plug-in elements and the inner circumferences of the inner spaces of the plug-in receptables are filled with the potting compound. This has the advantage, that after the integration of tolerance compensation of the degrees of freedom a locking is enabled with a large number of structural interfaces between two large systems (e. g. the crown module and the fuselage).

According to a further embodiment the method an adjustment for tolerance compensation is made in the connecting interface structure by a up to six degrees of freedom movement of the cabin element with respect to the fuselage. This has the advantage, that beside eliminating a large number of manual installation steps for locking and adjustment of interfaces the lead time and productivity of the cabin installation is significantly increased.

The invention will be explained in greater detail with reference to exemplary embodiments depicted in the drawings as appended.
- Fig. 1: schematically depicts a side sectional view of a connection interface structure according to an embodiment of the invention cut along line A:A of Fig. 2;
- Fig. 2: schematically depicts a front sectional of the connection interface structure according to an embodiment of the invention;
- Fig. 3: schematically depicts an installation situation of a cabin element in an aircraft fuselage using a plurality of connection interface structures according to an embodiment of the invention; and
- Fig. 4: schematically depicts the method steps of installing a cabin element using the connecting interface structure according to an embodiment of the invention.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the detailed description. The elements of the drawings are not necessarily to scale relative to each other. In the figures, like reference numerals denote like or functionally like components, unless indicated otherwise.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

In the figures of the drawings, identical elements, features, and components that have the same function, and the same effect are each given the same reference signs, unless otherwise specified.

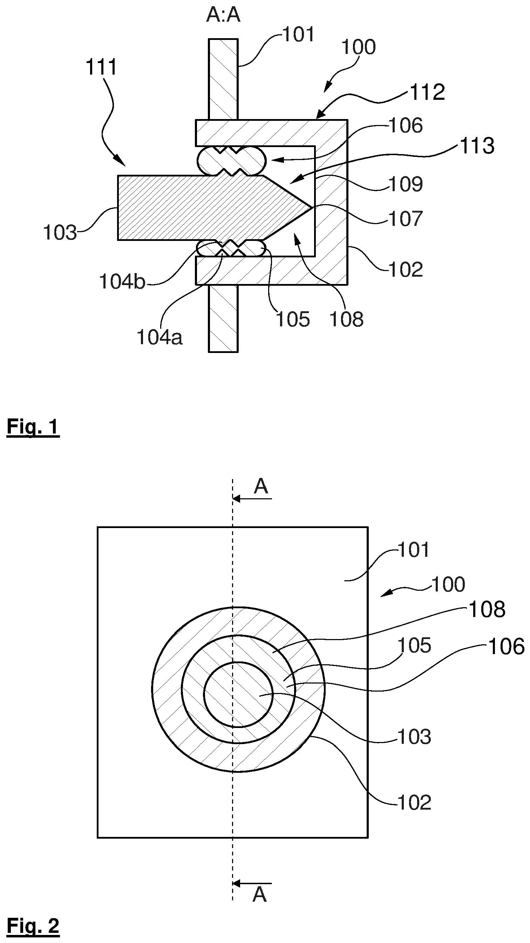

Fig. 1 schematically depicts a side sectional view according to line A:A of Fig. 2 of a connection interface structure 100. Fig. 1 depicts the connection interface structure 100 in the installed state. A plug-in receptable 102 installed in a primary structure 101 of the aircraft fuselage 300 is shown with a plug-in element 103 introduced in the inner space 108 of the plug-in receptable 102 in clearance fit. The clearance 106 between the plug-in receptable 102 and the plug-in element 109 is filled with a potting compound 105 filling the clearance 106. Both, the plug-in receptable 102 and the plug-in element 103 have centering means 104a, 104b protruding from the inner circumference 112 of the plug-in receptable 102 as well as from the outer circumference 111 of the plug-in element 103, thereby facing each other. The centering means 104a, 104b are embedded in the potting compound 105 and ensure a stable connection and fixing of the position of the plug-in element 103 in the inner space 108 of the plug-in receptable 102, once a centering and adjustment for tolerance compensation has been made. The plug-in element 103 is configured as a bolt having a tip 107 abutting the inner end face 109 of the plug-in receptable 102. The tip 107 supports and guides the insertion of the plug-in element 103 into the plug-in receptable 102. The plug-in element 103 protrudes from the cabin element 200 in an installation direction with respect to the primary structure 101. The potting compound 105 is selected from an activated potting compound 105 and solidifies after filling the clearance 106 thereby fixing the position of the two elements with respect to each other, to ensure and fix the stable connection within the connecting interface structure 100. The invention connecting interface structure 100 supports the implementation of a flexible joining process with the possibility of tolerance compensation in up to six degrees of freedom before filling the clearance 106 with the potting compound 105 through an in-situ molding process. Up to six degrees of freedom as used herein refers to the six mechanical degrees of freedom of movement of a rigid body in three-dimensional space. Specifically, the body is free to change position as forward/backward, up/down, left/right translation in three perpendicular axes, combined with changes in orientation through rotation about three perpendicular axes.

Fig. 2 schematically depicts a sectional view of the connection interface structure 100. Therein the plug-in receptable 102 is incorporated in a primary structure 101 of an aircraft fuselage 300. The plug-in element 103 is inserted in the inner space 108 of the plug-in receptable 102 in a clearance fit. The clearance 106 between the two elements is thereafter filled with a potting compound 105. The plug-in receptable 102 is designed as a round bushing having a pot-shaped configuration, as may be gathered in particular from Fig. 1 showing the same structure in a side sectional view. The clearance 106 between the plug-in receptable 102 and the plug-in element 103 enables the tolerance compensation of rotational and translational degrees of freedom. After precise alignment a quickly activating potting compound 105 is activated in the clearance 106 and creates an inseparable connection of the two elements.

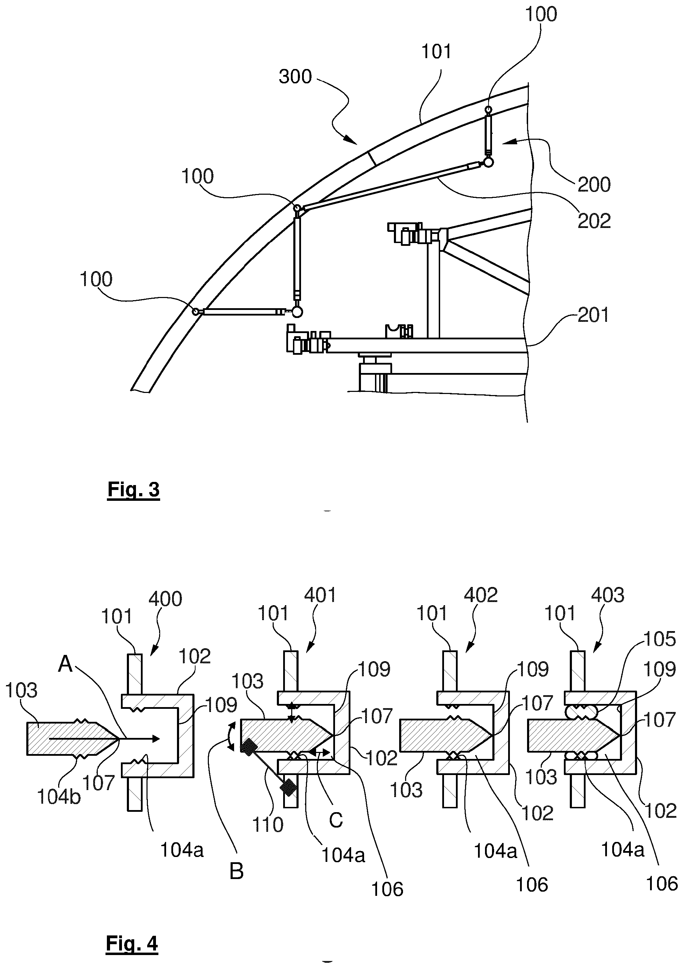

Fig. 3 schematically depicts an installation situation of a cabin element 200 in an aircraft fuselage 300 using a plurality of connection interface structures 100 according to an embodiment of the invention. The cabin element 200 of Fig. 3 is configured as a crown module 202 to be fixed to the primary structure 101 of an aircraft fuselage 300. In the primary structure 101 as shown in Fig 3 a total of three plug-in receptables 102 is arranged distributed evenly over the length of the primary structure 101. Further primary structures 101 are arranged along a longitudinal extension of the fuselage 300 adjacent to the primary structure 101 shown in Fig. 3 and have the same configuration. After insertion of the plug-in elements 103 provided at the crown module 202 and protruding in the direction of the plug-in receptable 102 in a clearance fit, a tolerance compensation for up to six degrees of freedom is performed. Once an adjustment was made, degrees of freedom are firmly stored in the connecting interface structure 100 by creating an inseparable connection utilizing a potting compound 105 provided in the plug-in receptable 102 and filling the clearance 106 between the plug-in element 103 and the plug-in receptable 102, i.e. the clearance 106 present between the inner circumference 112 of the plug-in receptable 102 and the outer circumference 111 of the bolt-shaped plug-in element 103. As an alternative a potting compound 105 having a defined open time window for curing can be placed in the plug-in receptable 102 before inserting the plug-in element 103. During the open time window, positioning of the cabin element 200 and tolerance compensation is made. The inseparable connection and storing of the position is established after curing of the potting compound 105. Fig. 3 also depicts a crown module installation jig 201 used during installation of the cabin element 200 configured as a crown module 202. Tolerance compensation can be made during the installation process with a total of up to six degrees of freedom. Curing of the potting compound 105 stores the adjusted position and firmly connects the cabin element 200, respectively the crown module 202 with the primary structure 101 of the aircraft fuselage 300.

Fig. 4 schematically depicts the method steps of installation of a cabin element using an interface structure 100 according to an embodiment of the invention. In a first step 400 of the method a plug-in element 103 configured as a bolt is approached to the plug-in receptable 102 configured as a round bushing having an inner end face 109 along the direction of arrow A.

In the second step 401 of the method, the end portion 113 of the plug-in element 103 is fully inserted in the plug-in receptable 102 with the tip 107 abutting to the inner end face 109 of the plug-in receptable 102 in a clearance fit. During alignment and tolerance compensation adjustment said clearance fit between the plug-in element 103 and the plug-in receptable 102, enables the tolerance compensation of rotational and translational degrees of freedom as indicated by arrows B and C. The centering means 104a, 104b provided protruding from the inner circumference 112 of the plug-in receptable 102 and the outer circumference 111 of the plug-in element 103 define an outer contour.

During insertion an installation jig 110 is used to link between the primary structure 101 and the cabin element 200, such as the crown module 202, from which the plug-in element 103 is protruding. The installation jig 110 ensures that the plug-in element 103 is correctly aligned.

In the third step 402 of the method, the plug-in element 103 and plug-in receptable 102 connected in a clearance fit are precisely aligned and tolerance compensation with rotational and translational degrees of freedom is completed.

In the fourth step 403, after completion of alignment of a plurality of plug-in elements 103 provided at the cabin element 200 and inserted in the respective plug-in receptables 102 provided at the primary structure 101 a potting compound 105 is injected in the clearance 106. The centering means 104a, 104b are embedded in the potting compound 105 and support a positive connection between the potting compound 105, the plug-in element 103 and the plug-in receptable 102, respectively. In the embodiment a quickly activating potting compound 105 is provided. After activation in the clearance 106 the plug-in element 103 and the plug-in receptable 102 are inseparably connected.

The invention method allows a high degree of functional integration, as up to six degrees of freedom of tolerance can be compensated within a single connecting interface structure 100 consisting of only three components, a plug-in element 103 preferably configured bolt shaped, a plug-in receptable 102, preferably configured as a bushing and a potting compound 105 placed in the clearance 106 between the elements to create an inseparable connection. The connection interface structure 100 enables an installation method providing the possibility of carrying out tolerance compensation for several degrees of freedom within a small installation space using a small number of process steps. After alignment and adjustment the degrees of freedom are firmly stored by creating an inseparable connection utilizing the potting compound 105 in the connecting interface structures 100. The use of a plurality of connecting interface structures 100 enables the integration of tolerance compensation and locking of a plurality of elements of large cabin elements 200, such as a crown module 202 and a fuselage 300 in one defined installation movement. This eliminates a large number of manual installation steps such as locking and adjustment of each interface thereby reducing lead time and increasing productivity of cabin installation significantly. Additionally, processes with poor ergonomics can be eliminated from the installation process while repeatability of the installation and adjustment can be improved. Thus, overall accuracy of the installed system can be increased.

In the foregoing detailed description, various features are grouped together in one or more examples or examples with the purpose of streamlining the disclosure. It is to be understood that the above description is intended to be illustrative, and not restrictive. It is intended to cover all alternatives and modifications, within the scope of the appended claims.

Many other examples will be apparent to one skilled in the art upon reviewing the above specification. The embodiments were chosen and described to best explain the principles of the invention and its practical applications, to thereby enable others skilled in the art to best utilize the invention and various embodiments with various modifications as are suited to the particular use contemplated.

### List of reference signs

- 100: connection interface structure
- 101: primary structure
- 102: plug-in receptable
- 103: plug-in element
- 104a, b: centering means
- 105: potting compound
- 106: clearance
- 107: tip
- 108: inner space
- 109: end face
- 110: installation jig
- 111: outer circumference
- 112: inner circumference
- 113: end region
- 200: cabin element
- 201: crown module installation jig
- 202: crown module
- 300: fuselage
- 400: first step
- 401: second step
- 402: third step
- 403: fourth step
- A, B, C: arrow

## Claims

1. A connecting interface structure (100) for connecting a cabin element (200) to a primary structure (101) of a fuselage (300) of a vehicle, in particular an aircraft, wherein the connecting interface structure (100) comprises
- a bolt-shaped plug-in element (103) configured to be provided at the cabin element (200), having an outer circumference (111) and protruding towards the primary structure (101), and
- a plug-in receptable (102) configured to be provided at the primary structure (101), having an inner space (108) with an inner circumference (112) and an inner end face (109), with the inner space (108) configured to receive the plug-in element (103) in a clearance fit,
- provided in a clearance (106) between the plug-in receptable (102) and the plug-in element (103) a potting compound (105) stably connecting the plug-in receptable (102) and the plug-in element (103).

2. Connecting interface structure (100), according to claim 1, wherein the inner space (108) is configured to be filled after receiving the plug-in element (103) with a potting compound (105), in particular an activated potting compound (105) establishing a position stable connection of the plug-in element (103) and the plug-in receptable (102).

3. Connecting interface structure (100) according to claim 1 or 2, wherein the plug-in receptable (102) is configured as an essentially round bushing having a pot-shaped configuration.

4. Connecting interface structure (100) according to any of claims 1 to 3, wherein the plug-in element (103) is configured as a bolt having an at least essentially round outer circumference (111).

5. Connecting interface structure (100) according to any of claims 1 to 4, wherein the plug-in element (103) has an end region (113) formed as a tip (107) abutting to the inner end face (109) of the plug-in receptable (102) after insertion in the plug-in receptable (102).

6. Connecting interface structure (100) according to any of claims 1 to 5, wherein at least one centering means (104a, b) is provided in at least one of the plug-in receptable (102) and the plug-in element (103) protruding from at least one of the inner circumference (112) of the plug-in receptable (102) and the outer circumference (111) of the plug-in element (103).

7. Connecting interface structure (100) according to any of claims 1 to 6, wherein the plug-in receptable (102) is provided one of connected to the primary structure (101) and incorporated into the primary structure (101).

8. Connecting interface structure (100) according to any of claims 1 to 7, wherein the cabin element (200) is at least one of a crown module (202), a cabin component, a cabin system and a cabin substructure to be installed in the vehicle fuselage (300).

9. A method of connecting a cabin element (200) to a primary structure (101) of a fuselage (300) of a vehicle, in particular an aircraft, using a connecting interface structure (100) according to any of claims 1 to 8, wherein the at least one bolt-shaped plug-in element (103) provided at the cabin element (200) protruding towards the primary structure (101) is inserted in the inner space (108) of at least one plug-in receptable (102) provided at the primary structure (101) in a clearance fit, adjusting the position of the cabin element (200) with respect to the fuselage (300) for tolerance compensation and filling a clearance (106) between the bolt-shaped plug-in element (103) and the inner circumference (112) of the inner space (108) with a potting compound (105), in particular an activated potting compound (105).

10. Method according to claim 9, wherein the potting compound (105) is allowed to cure to establish a position stable connection of the bolt-shaped plug-in element (103) in the plug-in receptable (102).

11. Method according to claim 9 or 10, wherein the at least one centering means (104a, b) provided in at least one of the plug-in receptable (102) and the plug-in element (103) and protruding from at least one of the inner circumference (112) of the plug-in receptable (102) and the outer circumference (111) of the plug-in element (103) is embedded in the potting compound (105).

12. Method according to any of claims 9 to 11, wherein a plurality of plug-in receptables (102) is provided at the primary structure (101) of the fuselage (300) and a plurality of corresponding plug-in elements (103) is provide at the cabin element (200) and wherein the respective plug-in elements (103) are inserted simultaneously or sequentially in the respective plug-in receptables (102).

13. Method according to claim 12, wherein after adjusting the position of the cabin element (200) with respect to the fuselage (300) for tolerance compensation followed by insertion of the respective plug-in elements (103) in the respective plug-in receptables (102) clearances (106) between the plug-in elements (103) and the inner circumferences (112) in the inner spaces (108) of the plug-in receptables (102) are filled with the potting compound (105).

14. Method according to any of claims 9 to 13, wherein adjusting for tolerance compensation is made in the connecting interface structure (100) by an up to six degrees of freedom movement of the cabin element (200) with respect to the fuselage (300).

15. A vehicle, in particular an aircraft, having a fuselage (300) provided with at least one cabin element (200) connected to a vehicle primary structure (101) using a connecting interface structure (100) of any of claims 1 to 8 with a method of any of claims 9 to 14.

## Patentansprüche

1. Verbindungsschnittstellenstruktur (100) zum Verbinden eines Kabinenelements (200) mit einer Primärstruktur (101) eines Rumpfes (300) eines Fahrzeugs, insbesondere eines Luftfahrzeugs, wobei die Verbindungsschnittstellenstruktur (100) umfasst
- ein bolzenförmiges Steckelement (103), das dazu ausgelegt ist, an dem Kabinenelement (200) bereitgestellt zu werden, einen Außenumfang (111) aufweist und in Richtung der Primärstruktur (101) vorsteht, und
- eine Steckaufnahme (102), die dazu ausgelegt ist, an der Primärstruktur (101) bereitgestellt zu werden, mit einem Innenraum (108) mit einem Innenumfang (112) und einer inneren Endfläche (109), wobei der Innenraum (108) dazu ausgelegt ist, das Steckelement (103) in einer Spielpassung aufzunehmen,
- eine in einem Zwischenraum (106) zwischen der Steckaufnahme (102) und dem Steckelement (103) vorgesehene Vergussmasse (105), die die Steckaufnahme (102) und das Steckelement (103) stabil verbindet.

2. Verbindungsschnittstellenstruktur (100) nach Anspruch 1, wobei der Innenraum (108) dazu ausgelegt ist, nach Aufnahme des Steckelements (103) mit einer Vergussmasse (105), insbesondere einer aktivierten Vergussmasse (105), die eine positionsstabile Verbindung des Steckelements (103) und der Steckaufnahme (102) herstellt, gefüllt zu werden.

3. Verbindungsschnittstellenstruktur (100) nach Anspruch 1 oder 2, wobei die Steckaufnahme (102) als im Wesentlichen runde Buchse mit topfförmiger Konfiguration ausgebildet ist.

4. Verbindungsschnittstellenstruktur (100) nach einem der Ansprüche 1 bis 3, wobei das Steckelement (103) als Bolzen mit einem zumindest im Wesentlichen runden Außenumfang (111) ausgebildet ist.

5. Verbindungsschnittstellenstruktur (100) nach einem der Ansprüche 1 bis 4, wobei das Steckelement (103) einen Endbereich (113) aufweist, der als eine Spitze (107) ausgebildet ist, die nach dem Einsetzen in die Steckaufnahme (102) an der inneren Endfläche (109) der Steckaufnahme (102) anliegt.

6. Verbindungsschnittstellenstruktur (100) nach einem der Ansprüche 1 bis 5, wobei mindestens ein Zentriermittel (104a, b) in der Steckaufnahme (102) und/oder dem Steckelement (103) bereitgestellt ist und von dem Innenumfang (112) der Steckaufnahme (102) und/oder dem Außenumfang (111) des Steckelements (103) vorsteht.

7. Verbindungsschnittstellenstruktur (100) nach einem der Ansprüche 1 bis 6, wobei die Steckaufnahme (102) entweder mit der Primärstruktur (101) verbunden oder in die Primärstruktur (101) integriert bereitgestellt ist.

8. Verbindungsschnittstellenstruktur (100) nach einem der Ansprüche 1 bis 7, wobei das Kabinenelement (200) mindestens eines der folgenden im Fahrzeugrumpf (300) zu installierenden Elemente ist: ein Kronenmodul (202), eine Kabinenkomponente, ein Kabinensystem oder eine Kabinenunterstruktur.

9. Verfahren zum Verbinden eines Kabinenelements (200) mit einer Primärstruktur (101) eines Rumpfes (300) eines Fahrzeugs, insbesondere eines Luftfahrzeugs, unter Verwendung einer Verbindungsschnittstellenstruktur (100) nach einem der Ansprüche 1 bis 8, wobei das mindestens eine bolzenförmige Steckelement (103), das an dem Kabinenelement (200) bereitgestellt ist und in Richtung der Primärstruktur (101) vorsteht, mit Spielpassung in den Innenraum (108) mindestens einer an der Primärstruktur (101) bereitgestellten Steckaufnahme (102) eingesetzt wird, die Position des Kabinenelements (200) gegenüber dem Rumpf (300) zum Toleranzausgleich eingestellt wird und ein Zwischenraum (106) zwischen dem bolzenförmigen Steckelement (103) und dem Innenumfang (112) des Innenraums (108) mit einer Vergussmasse (105), insbesondere einer aktivierten Vergussmasse (105), gefüllt wird.

10. Verfahren nach Anspruch 9, wobei die Vergussmasse (105) aushärtet, um eine positionsstabile Verbindung des bolzenförmigen Steckelements (103) in der Steckaufnahme (102) herzustellen.

11. Verfahren nach Anspruch 9 oder 10, wobei das mindestens eine Zentriermittel (104a, b), das in der Steckaufnahme (102) und/oder dem Steckelement (103) bereitgestellt ist und vom Innenumfang (112) der Steckaufnahme (102) und/oder vom Außenumfang (111) des Steckelements (103) vorsteht, in die Vergussmasse (105) eingebettet wird.

12. Verfahren nach einem der Ansprüche 9 bis 11, wobei eine Mehrzahl von Steckaufnahmen (102) an der Primärstruktur (101) des Rumpfes (300) bereitgestellt wird und eine Mehrzahl entsprechender Steckelemente (103) an dem Kabinenelement (200) bereitgestellt wird und wobei die jeweiligen Steckelemente (103) gleichzeitig oder nacheinander in die jeweiligen Steckaufnahmen (102) eingesetzt werden.

13. Verfahren nach Anspruch 12, wobei nach dem Einstellen der Position des Kabinenelements (200) bezüglich des Rumpfes (300) zum Toleranzausgleich und dem anschließenden Einsetzen der jeweiligen Steckelemente (103) in die jeweiligen Steckaufnahmen (102) Zwischenräume (106) zwischen den Steckelementen (103) und den Innenumfängen (112) in den Innenräumen (108) der Steckaufnahmen (102) mit der Vergussmasse (105) gefüllt werden.

14. Verfahren nach einem der Ansprüche 9 bis 13, wobei das Einstellen zum Toleranzausgleich in der Verbindungsschnittstellenstruktur (100) durch eine Bewegung des Kabinenelements (200) mit bis zu sechs Freiheitsgraden in Bezug auf den Rumpf (300) erfolgt.

15. Fahrzeug, insbesondere Luftfahrzeug, mit einem Rumpf (300), der mit mindestens einem Kabinenelement (200) versehen ist, das mit einer Fahrzeugprimärstruktur (101) unter Verwendung einer Verbindungsschnittstellenstruktur (100) nach einem der Ansprüche 1 bis 8 mittels eines Verfahrens nach einem der Ansprüche 9 bis 14 verbunden ist.

## Revendications

1. Structure d'interface de raccordement (100) destiné à raccorder un élément de cabine (200) à une structure primaire (101) d'un fuselage (300) d'un véhicule, en particulier d'un aéronef, dans laquelle la structure d'interface de raccordement (100) comprend
- un élément amovible en forme de boulon (103) configuré pour être prévu sur l'élément de cabine (200), ayant une circonférence extérieure (111) et faisant saillie vers la structure primaire (101), et
- un réceptacle amovible (102) configuré pour être prévu sur la structure primaire (101), ayant un espace intérieur (108) avec une circonférence intérieure (112) et une face d'extrémité intérieure (109), l'espace intérieur (108) étant configuré pour recevoir l'élément amovible (103) en un ajustement avec jeu,
- prévu dans un dégagement (106) entre le réceptacle amovible (102) et l'élément amovible (103), un composé d'enrobage (105) raccordant de façon stable le réceptacle amovible (102) et l'élément amovible (103).

2. Structure d'interface de raccordement (100) selon la revendication 1, dans laquelle l'espace intérieur (108) est configuré pour être rempli après avoir reçu l'élément amovible (103) avec un composé d'enrobage (105), en particulier un composé d'enrobage activé (105) établissant un raccordement stable en position de l'élément amovible (103) et du réceptacle amovible (102).

3. Structure d'interface de raccordement (100) selon la revendication 1 ou 2, dans laquelle le réceptacle amovible (102) est configuré sous forme de douille essentiellement ronde ayant une configuration de type pot.

4. Structure d'interface de raccordement (100) selon quelconques des revendications 1 à 3, dans laquelle l'élément amovible (103) est configuré sous forme de boulon ayant une circonférence extérieure au moins essentiellement ronde (111).

5. Structure d'interface de raccordement (100) selon quelconques des revendications 1 à 4, dans laquelle l'élément amovible (103) a une région d'extrémité (113) sous forme de pointe (107) venant en butée sur la face d'extrémité intérieure (109) du réceptacle amovible (102) après l'insertion dans le réceptacle amovible (102).

6. Structure d'interface de raccordement (100) selon quelconques des revendications 1 à 5, dans laquelle au moins un moyen de centrage (104a, b) est prévu dans au moins un du réceptacle amovible (102) et de l'élément amovible (103) faisant saillie à partir d'au moins une de la circonférence intérieure (112) du réceptacle amovible (102) et de la circonférence extérieure (111) de l'élément amovible (103).

7. Structure d'interface de raccordement (100) selon quelconques des revendications 1 à 6, dans laquelle le réceptacle amovible (102) est prévu soit raccordé à la structure primaire (101) soit incorporé dans la structure primaire (101).

8. Structure d'interface de raccordement (100) selon quelconques des revendications 1 à 7, dans laquelle l'élément de cabine (200) est au moins un d'un module de sommet (202), d'un composant de cabine, d'un système de cabine, et d'une sous-structure de cabine, devant être installé dans le fuselage de véhicule (300).

9. Procédé de raccordement d'un élément de cabine (200) à une structure primaire (101) d'un fuselage (300) d'un véhicule, en particulier d'un aéronef, en utilisant une structure d'interface de raccordement (100) selon quelconques des revendications 1 à 8, dans lequel l'au moins un élément amovible en forme de boulon (103) prévu sur l'élément de cabine (200) faisant saillie vers la structure primaire (101) est inséré dans l'espace intérieur (108) d'au moins un réceptacle amovible (102) prévu sur la structure primaire (101) en un ajustement avec jeu, le réglage de la position de l'élément de cabine (200) par rapport au fuselage (300) pour prendre en compte une compensation de tolérance, et le remplissage d'un dégagement (106) entre l'élément amovible en forme de boulon (103) et la circonférence intérieure (112) de l'espace intérieur (108) avec un composé d'enrobage (105), en particulier un composé d'enrobage activé (105).

10. Procédé selon la revendication 9, dans lequel le composé d'enrobage (105) est permis de durcir pour établir une raccordement stable en position de l'élément amovible en forme de boulon (103) dans le réceptacle amovible (102).

11. Procédé selon la revendication 9 ou 10, dans lequel l'au moins un moyen de centrage (104a, b) prévu dans au moins un du réceptacle amovible (102) et de l'élément amovible (103) et faisant saillie à partir d'au moins une de la circonférence intérieure (112) du réceptacle amovible (102) et de la circonférence extérieure (111) de l'élément amovible (103) est encastré dans le composé d'enrobage (105).

12. Procédé selon quelconques des revendications 9 à 11, dans lequel une pluralité de réceptacles amovibles (102) est prévue sur la structure primaire (101) du fuselage (300) et une pluralité d'éléments amovibles correspondant (103) est fournie sur l'élément de cabine (200) et dans lequel les éléments amovibles respectifs (103) sont insérés simultanément ou séquentiellement dans les réceptacles amovibles respectifs (102).

13. Procédé selon la revendication 12, dans lequel, après le réglage de la position de l'élément de cabine (200) par rapport au fuselage (300) pour prendre en compte une compensation de tolérance, suivi par l'insertion des éléments amovibles respectifs (103) dans les réceptacles amovibles respectifs (102), des dégagements (106) entre les éléments amovibles (103) et les circonférences intérieures (112) dans les espaces intérieurs (108) des réceptacles amovibles (102) sont remplis avec le composé d'enrobage (105).

14. Procédé selon quelconques des revendications 9 à 13, dans lequel le réglage pour prendre en compte une compensation de tolérance est effectué dans la structure d'interface de raccordement (100) selon un mouvement pouvant atteindre six degrés de liberté de l'élément de cabine (200) par rapport au fuselage (300).

15. Véhicule, en particulier aéronef, ayant un fuselage (300) pourvu d'au moins un élément de cabine (200) raccordé à une structure primaire de véhicule (101) en utilisant une structure d'interface de raccordement (100) de quelconques des revendications 1 à 8 avec un procédé de quelconques des revendications 9 à 14.
